# FASCICULE DE BREVET EUROPEEN

(11) **EP 2 350 725 B1**
(45) Date de publication et mention de la délivrance du brevet: **18.03.2015**
(21) Numéro de dépôt: 09752850.9
(22) Date de dépôt: 19.11.2009
(51) Int. Cl.: G02B 17/06, G02B 23/02, G02B 7/182

(54) **SYSTEME OPTIQUE SPATIAL COMPORTANT DES MOYENS DE CONTROLE ACTIF DE L'OPTIQUE**
RAUM-OPTIKSYSTEM MIT MITTELN ZUR AKTIVEN STEUERUNG DER OPTIK
SPACE OPTICAL SYSTEM COMPRISING MEANS OF ACTIVE CONTROL OF THE OPTICS

(30) Priorité: 25.11.2008 FR 0806620
(43) Date de publication de la demande: 03.08.2011
(73) Titulaire: THALES, 92200 Neuilly-sur-Seine (FR)
(72) Inventeur: BLANCHARD, Laurent, F-06370 Mouans-Sartoux (FR); FALZON, Frédéric, F-06580 Pegomas (FR); LIOTARD, Arnaud, F-06250 Mougins (FR); PERRIN, Guillaume, F-06400 La Colle Sur Loup (FR)
(74) Mandataire: Collet, Alain
(86) Numéro de dépôt international: PCT/EP2009/065473
(87) Numéro de publication internationale: WO 2010/060853

(56) Documents cités:
- EP-A- 1 271 805
- EP-A- 1 676 776
- US-A- 5 191 469
- US-A1- 2002 186 479
- BORTOLETTO FAVIO ET AL: "An active telescope secondary mirror control system" REVIEW OF SCIENTIFIC INSTRUMENTS, AIP, MELVILLE, NY, US, vol. 70, no. 6, 1 juin 1999 (1999-06-01), pages 2856-2860, XP012037520 ISSN: 0034-6748

## Description

Le domaine de l'invention concerne les systèmes optiques pour l'observation spatiale et plus particulièrement les systèmes optiques d'observation destinés à être embarqués dans des engins spatiaux et à être déployés dans l'espace.

On entend ici par systèmes optiques pour l'observation spatiale les télescopes permettant d'obtenir des images à haute résolution pour l'observation de la Terre depuis l'Espace ou pour l'observation de l'espace profond. Ces télescopes sont par exemple de type Cassegrain, Grégory, Korsch, Ritchey-Chrétien, ou Newton... Les détecteurs optiques d'un télescope spatial doivent être capables d'enregistrer des images d'objets très peu lumineux nécessitant généralement des temps de pose sous les limites imposées par la capacité de stabilisation du système optique. Ces applications requièrent l'utilisation de systèmes d'observation spatiaux de plus en plus grands et performants.

Les télescopes spatiaux sont destinés à être solidarisés à des satellites prévus pour être mis en orbite. A l'heure actuelle, les télescopes sont conçus pour pouvoir subir les vibrations de la phase de tir pour l'envoi du satellite dans l'espace, puis les agressions thermoélastiques orbitales sans modifications notables des réglages optiques réalisés au sol. Ces contraintes mènent à la conception de structures extrêmement robustes employant des matériaux exotiques, des liaisons hyper-stables et des systèmes de contrôle de la température ultra-précis. Les conséquences d'une telle conception de ces structures sont un poids et des coûts importants.

Par ailleurs, dans un futur proche, les exigences de surface collectrice des futurs systèmes d'observation font que leurs structures tendent à être déployables. Les télescopes précédemment cités comprennent un miroir primaire, un miroir secondaire éloigné du miroir primaire d'une distance choisie et une base supportrice comportant le miroir primaire sur laquelle est positionnée une structure mécanique portant un support du miroir secondaire. On entend par structure déployable une structure dans laquelle le miroir secondaire peut être dans une première configuration à une position rapprochée ou en contact avec la base supportrice et dans une deuxième configuration être éloigné du miroir primaire. Grâce à ce type de structure, il est possible de réduire l'encombrement d'un satellite lors de son transport depuis le sol jusqu'à son orbite de mission et par conséquent d'embarquer un plus grand nombre de satellites à bord des lanceurs. Cependant pour ces structures, il doit être envisagé un système permettant de réaliser le réglage optique en vol.

Pour cela, il existe des télescopes comportant des systèmes de réglage et de correction mécanique constitués d'un hexapode à l'interface du miroir secondaire. Cet hexapode comprend le système d'actionneurs, le système de contrôle des actionneurs et le câblage d'alimentation. Une telle solution implique que ces derniers éléments soient également déployés. On connaît par exemple, le brevet américain US 6.477.912 décrivant un système mécanique permettant le contrôle d'un plateau pouvant être par exemple un miroir secondaire de télescope. Des télescopes voisins sont cités dans le document EP-A1-1 676 776 et dans l'article « An active telescope secondary mirror control system » publié en juin 1999 dans «Review of scientific instrument » au volume 70, n°6.

Les systèmes de contrôle actif de correction utilisent fréquemment des algorithmes de restitution du front d'onde. On peut citer par exemple le brevet américain US 4.309.602 décrivant une solution de contrôle d'un système optique au moyen par exemple d'un algorithme de restitution du front d'onde par diversité de phase.

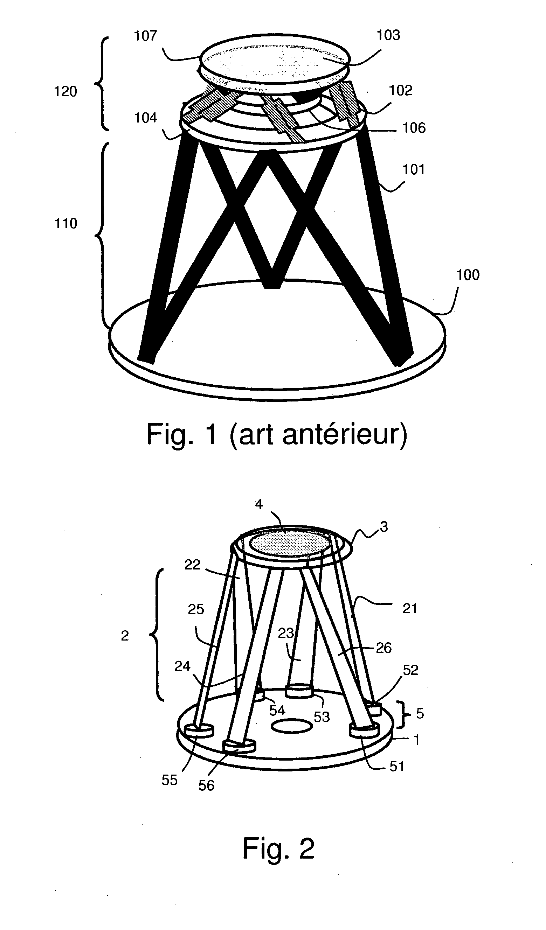

La figure 1 représente un schéma simplifié d'un télescope spatial existant comportant un miroir primaire et un miroir secondaire 106. Le miroir primaire, non représenté, est positionné au niveau d'une base supportrice 100 et le miroir secondaire 106 est supporté par une première structure mécanique 110 non déployable et immobile, comprenant trois paires de bras mécaniques 101, destinée à éloigner le miroir secondaire du miroir primaire, et par une seconde structure mécanique constituée d'éléments mécaniques 103 reliant le miroir secondaire 106 à un plateau 107. La position du miroir secondaire est modifiée par les actionneurs 102 en déplaçant le plateau 107. Le plateau 107, le miroir secondaire 106, les actionneurs 102 et la seconde structure mécanique forment la structure hexapode 120 permettant de modifier la position du miroir secondaire. Cet hexapode comporte également les systèmes électroniques d'alimentation, de commande, etc... Cette dernière solution, si elle permet effectivement de corriger la position et l'orientation du miroir secondaire, induisent une augmentation de masse à une position éloignée du centre de gravité du système optique. Cette configuration réduit l'agilité du système et abaisse les fréquences en vibration des premiers modes propres du télescope. De plus, cette augmentation de masse au niveau du miroir secondaire requiert une augmentation de la rigidité de la structure de manière à pouvoir faire face aux accélérations durant la phase de tir et par voie de conséquence une augmentation de la masse de la structure.

On connaît le brevet français 2628670 de l'INRIA (Institut National de Recherche en Informatique et en Automatique) décrivant un dispositif articulé pour le domaine de la robotique, notamment pour la conception d'une main de robot ou également pour la conception de simulateur d'engin. Ce dispositif articulé permet une haute précision de positionnement.

L'invention a pour objectif de palier les inconvénients des solutions citées précédemment et de proposer un système optique à contrôle actif de l'optique de plus grande envergure, présentant de meilleure performance et résistant aux contraintes d'utilisation spatiale.

Plus précisément, l'invention concerne un système optique d'observation spatial comprenant au moins un miroir primaire, un miroir secondaire, une base supportrice comportant le miroir primaire, sur laquelle est positionnée une structure mécanique portant un support du miroir secondaire, et un moyen de mesure opto-électronique, ladite structure mécanique comprenant plusieurs bras mécaniques et le moyen de mesure opto-électronique captant des images acquises par le système optique. Le système optique d'observation spatial selon l'invention est caractérisé :
- en ce qu'il comporte un moyen de calcul calculant des données de correction de positionnement du miroir secondaire à partir de données provenant du moyen de mesure opto-électronique,
- en ce qu'il comporte également un système comprenant plusieurs actionneurs positionnés au niveau de la base supportrice, lesdits actionneurs étant reliés aux extrémités inférieures desdits bras mécaniques et les extrémités supérieures desdits bras mécaniques étant reliées au support du miroir secondaire sur la périphérie du support,
- et en ce que le positionnement du miroir secondaire est ajusté au moyen des actionneurs déplaçant l'extrémité inférieure desdits bras mécaniques selon une trajectoire de translation en fonction des données de correction,
   le moyen de mesure optique, le moyen de calcul et le système d'actionneurs (5) constituant une chaîne de contrôle actif pour la correction du positionnement du miroir secondaire (4) pour ajuster la configuration d'observation du système optique.

Pendant la phase de correction, la longueur d'un bras mécanique est invariante et le miroir secondaire est immobile sur son support.

L'invention est avantageuse car la partie dédiée aux moyens électroniques et mécaniques du système de contrôle actif de l'optique du télescope est positionnée au niveau de la base supportrice. Ainsi la masse est principalement répartie au niveau de la base et le centre de gravité est donc rabaissé.

Dans un premier mode de réalisation, la structure mécanique portant le support du miroir secondaire est une structure déployable de façon que dans une première configuration le support du miroir repose directement sur la base supportrice et, dans une deuxième configuration le support du miroir est à une position éloignée de la base supportrice.

La structure du télescope ne comportant plus de système d'actionneurs au niveau du miroir secondaire, la solution facilite la mise en oeuvre d'une structure de télescope à architecture déployable du miroir secondaire car la structure mécanique peut être conçue avec de faibles contraintes de stabilité dimensionnelle. Et cela car les réglages du télescope sont réalisés en orbite. De façon avantageuse, le système optique fait preuve également d'une meilleure agilité du fait que la structure portant le miroir secondaire est de masse plus faible.

Les dimensions du télescope spatial peuvent également être augmentées permettant ainsi la conception de systèmes optiques plus performants.

Avantageusement, le télescope spatial peut être installé à l'intérieur d'un engin spatial et la structure mécanique est configurée dans ladite première configuration lorsque le système est installé dans ledit engin spatial et dans ladite deuxième configuration lorsque le système est en mode d'observation. La structure déployable diminue l'encombrement du système optique et par conséquent autorise le transport d'un plus grand nombre de systèmes à l'intérieur du lanceur.

Dans un second mode de réalisation, la structure mécanique est une architecture non déployable. L'électronique et la mécanique de contrôle du miroir secondaire étant positionnées au niveau de la base supportrice, la partie supérieure du télescope pour le support du miroir secondaire peut être facilement adaptée à la base supportrice.

Dans les deux modes de réalisation, l'invention est avantageuse car l'architecture mécanique rend la conception et l'évolution du système optique plus flexible qu'une solution avec le système de contrôle actif au niveau du miroir secondaire. Cette solution permet en effet d'utiliser une architecture avec un miroir secondaire déployable ou non. La base supportrice constitue une base mécanique standardisée pour un support de miroir secondaire.

Dans un mode de réalisation préférentiel, le système d'actionneurs comporte des actionneurs d'axes de translation perpendiculaire au plan supérieur de la base supportrice. Le système d'actionneurs comporte six actionneurs répartis sur la périphérie de la base supportrice pour déplacer le support du miroir secondaire selon six degrés de liberté. Pour ce mode de réalisation, la structure mécanique portant le support du miroir comporte de préférence six bras mécaniques, dont la longueur est égale à environ un mètre.

Pour la réalisation d'un télescope spatial auto-corrigé selon l'invention, le moyen de mesure optique, le moyen de calcul et le système d'actionneurs constituent une chaîne de contrôle actif pour la correction du positionnement du miroir secondaire pour ajuster la configuration d'observation du système optique.

De préférence, le moyen de calcul élabore les corrections de positionnement du miroir secondaire au moyen d'un algorithme de restitution du front d'onde et le système d'actionneurs et la structure mécanique portant le support du miroir secondaire constituent les moyens mécaniques destinés à introduire des défauts sur les images mesurées. Le système de contrôle actif embarqué détermine à partir de mesure d'images du télescope les corrections de positionnement à fournir à une position donnée. L'invention évite la mise en oeuvre de systèmes métrologiques couplés à la structure. Cela apporte une simplification des systèmes, en coût et en masse pour le télescope.

L'invention sera mieux comprise et d'autres avantages apparaîtront à la lecture de la description qui va suivre donnée à titre non limitatif et grâce aux figures annexées parmi lesquelles :
La figure 1 représente un schéma simplifié d'une solution existante pour un télescope spatial auto-corrigé comportant un hexapode de contrôle du miroir secondaire au niveau du miroir secondaire.
La figure 2 représente un schéma simplifié d'un mode de réalisation préférentiel de la structure mécanique et du système d'actionneurs pour un hexapode d'un télescope comportant un miroir primaire et un miroir secondaire. Par souci de clarté, les autres éléments du télescope ne sont pas représentés. Le miroir secondaire est positionné à une première position dans laquelle les actionneurs sont à la même configuration.

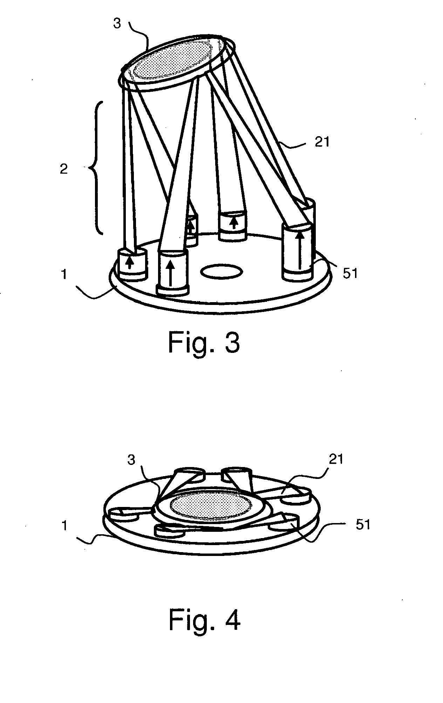

La figure 3 représente un schéma simplifié de la même structure mécanique et du système d'actionneurs avec le miroir secondaire dans une seconde position. Les actionneurs sont commandés pour être positionnés à des configurations distinctes. La représentation sur la figure des plages de valeur de déplacement des actionneurs est également une représentation simplifiée.
La figure 4 représente un schéma simplifié de la même structure mécanique. La structure mécanique est déployable et illustre le système dans une position dans laquelle le miroir secondaire repose directement sur la base supportrice.

L'invention a pour objectif de permettre la réduction de masse d'un système optique de type télescope spatial et d'améliorer l'agilité du système optique particulièrement pour un système optique comportant un miroir secondaire pouvant être déployable. Mais l'invention n'est pas limitée aux systèmes optiques à structure mécanique déployable. En effet, un avantage de l'invention est la flexibilité de conception du système optique, la base supportrice formant un élément mécanique et de contrôle standard sur lequel est portée la structure portant le miroir secondaire.

Pour cela l'invention telle que décrite par les figures 2 à 3 concerne la structure mécanique d'un télescope spatial à haute résolution comportant un miroir primaire et un miroir secondaire 4.

La figure 2 représente un schéma simplifié de la structure mécanique du télescope spatial selon un positionnement par défaut du miroir secondaire. Chacun des actionneurs contrôlant le positionnement du miroir est à la même position de repos. Le miroir primaire n'est pas représenté par souci de clarté et est positionné sur le plan supérieur de la base supportrice 1. Le support 3 du miroir secondaire 4 est porté par une structure mécanique 2 sur la base supportrice 1, ladite base supportrice 1 permettant le contrôle de positionnement du miroir secondaire 4 au moyen d'un système d'actionneurs 5 réalisant un mouvement de translation perpendiculaire au plan supérieur de la base supportrice 1. Le système d'actionneurs 5 comporte 6 actionneurs répartis sur la périphérie de la base supportrice. Le mouvement est réalisé sur l'extrémité inférieure de chaque bras 21 à 26 de la structure mécanique.

Durant la phase d'opération du système optique spatial lorsque le satellite est en orbite, ladite phase d'opération comprenant les phases d'observation et les phases de correction de l'observation par modification du positionnement du miroir secondaire, la longueur des bras mécaniques 21 à 26 est invariante. Le miroir secondaire doit être suffisamment éloigné du miroir primaire de façon que le plan focal des images corresponde au plan de détection d'images du moyen de mesure opto-électronique. De préférence, en configuration de fonctionnement la longueur des bras mécanique est d'environ un mètre. Lorsque la structure mécanique 2 est déployable, la longueur desdits bras peut être variable durant la phase de mise en opération du système optique. Cette phase se déroule généralement à la suite de l'éjection du lanceur et de la mise en orbite du satellite. Lorsque le satellite ne comporte pas une structure déployable du miroir secondaire, la longueur des bras est identique quelle que soit la phase d'opération. Le choix d'un mode de réalisation de déploiement de la structure mécanique 2 ne limite pas la portée de l'invention.

La base supportrice 1 comporte également le système de contrôle actif de l'optique du télescope. Les figures ne représentent pas les moyens électroniques de calcul et de commande par soucis de clarté. Un moyen de mesure optique, un moyen de calcul et le système d'actionneurs 5 constituent une chaîne de contrôle actif pour la correction du positionnement du miroir 4 pour ajuster la configuration d'observation du télescope spatial. Le moyen de mesure opto-électronique consiste généralement en des capteurs électroniques haute résolution, comme par exemple de type CCD, Charge-Coupled Device en langage anglo-saxon. Ces capteurs sont positionnés dans le plan focal du télescope. Le moyen de calcul réalise des fonctions de traitement de l'image à partir desquelles sont élaborées des données de corrections de positionnement du miroir secondaire 4.

Dans un autre mode de réalisation, le système optique comporte l'électronique et les moyens de contrôle du miroir secondaire tandis que les moyens de calcul sont localisés au sol. Le satellite embarquant le système optique comporte alors également des moyens de communication avec le sol pour recevoir les données de correction.

Les fonctions de traitement d'images pour le calcul des corrections de positionnement du miroir secondaire sont de préférence fondées sur des algorithmes de restitution du front d'onde. On peut nommer à titre d'exemple non limitatif les algorithmes par diversité de phase. Les documents cités dans l'art antérieur décrivent les méthodes de calcul par analyse du front d'onde. La restitution de phase consiste à extraire les informations sur les aberrations optiques de l'instrument contenues dans l'image grâce à des méthodes d'inversion numérique. Il existe plusieurs méthodes et configuration matérielles de mise en oeuvre des calculs.

Il est nécessaire de rappeler le principe d'élaboration de correction par analyse du front d'onde. Ce principe consiste à évaluer des défauts de positionnement du miroir secondaire au travers de son impact sur l'image. A partir d'une matrice de sensibilité optique du système, déterminée au moment de la conception du système optique, on connaît les effets du désalignement du miroir secondaire sur les aberrations détectées dans les images. En utilisant la matrice à l'inverse sur des images dont l'écart par rapport au plan focal est connu, il est possible de remonter à une évaluation du désalignement du miroir secondaire et donc sur une évaluation des corrections à apporter.

Pour la mesure d'images comportant des défauts par désalignement avec le plan focal, soit ces défauts sont introduits par des moyens mécaniques additionnels comme par exemple un moyen de déplacement du détecteur de l'image, soit par l'introduction d'une lame optique supplémentaire ou alors par déplacement du miroir secondaire. De préférence, l'invention élabore les corrections de positionnement du miroir secondaire par déplacement du miroir à une position connue introduisant des défauts sur l'image enregistrée. Toutefois, la méthode d'introduction de défaut sur l'image ne limite en aucun cas la portée et l'esprit de l'invention.

Par la méthode de diversité de phase, le positionnement du miroir secondaire peut être ajusté de façon itérative pour s'approcher d'une position optimale d'observation. Le procédé de mesure d'images et de correction du positionnement du miroir secondaire est réalisé à la suite de la phase de tir du lanceur mais également à de multiples moments de la mission de manière à assurer la performance optimale du télescope face à des phénomènes de vieillissement de la structure et/ou de ses matériaux.

La figure 3 représente par un schéma simplifié le système optique dans une configuration où le miroir est désaligné de façon qu'une image détectée sur le moyen de mesure comporte des défauts. Le positionnement du miroir secondaire est modifié par mouvement de translation des actionneurs 51 à 56 situés au niveau de la base supportrice 1. Chaque actionneur déplace l'extrémité inférieure d'un bras mécanique perpendiculairement au plan supérieur de la base supportrice 1. La plage de valeur de déplacement de l'extrémité inférieure d'un bras mécanique est d'environ quelques centimètres. La structure mécanique 2 comprend des bras mécaniques 21 à 26 et chacun des bras mécaniques comprend à une de ses extrémités une liaison pivot ou une liaison rotule et une liaison rotule à son autre extrémité, ces liaisons reliant d'une part un bras mécanique au support 3 du miroir secondaire et d'autre part ledit bras mécanique à l'actionneur de la base supportrice. Les liaisons peuvent être réalisées de diverses manières : par utilisation d'éléments tels que des cardans, des roulements, des paliers mais aussi des éléments flexibles ou la flexibilité des bras eux-mêmes. La longueur des bras reste invariante. Cette architecture mécanique permet ainsi de déplacer l'orientation du miroir secondaire selon 6 degrés de liberté.

Le moyen de calcul élaborant des données de correction de positionnement du miroir secondaires transmet ces corrections à un système de commande du système d'actionneurs 5. Ce système de commande transforme les données de correction de positionnement du miroir secondaire en des données de commande pour chacun des actionneurs 51 à 56, lesdits actionneurs réalisant des modifications de positionnement en altitude de la base des bras mécaniques. La loi de commande des actionneurs a pour rôle de transformer des instructions de positionnement du miroir secondaire en positionnement en altitude des actionneurs 51 à 56.

L'électronique et les moyens mécaniques de contrôle de l'optique sont positionnés au niveau de la base supportrice. La structure secondaire 2 et 3 portant le miroir secondaire 4 est de préférence conçue avec des éléments mécaniques caractérisés par de faibles exigences de stabilité dimensionnelle passive en comparaison d'une architecture mécanique qui serait réglée au sol étant donné que le réglage optique est réalisé en orbite. Une fois en orbite cette structure ne subit pas de contraintes mécaniques fortes. Cette dernière structure est également plus agile, l'énergie nécessaire pour modifier la configuration de la dite structure est également plus faible et les déplacements sont plus précis. Globalement, avec un système d'actionneurs positionné au niveau de la base supportrice le système optique comporte un système d'auto correction du positionnement du miroir secondaire plus performant en précision et en efficacité de correction.

La figure 4 représente une structure mécanique portant le support du miroir déployable de façon que dans une première position le support du miroir secondaire repose directement sur la base supportrice 1. Ainsi le télescope spatial est installé à l'intérieur d'un engin spatial et la structure mécanique est configurée dans ladite première position lorsque le système est installé dans ledit engin spatial. La structure déployable diminue l'encombrement du système optique et par conséquent autorise le transport d'un plus grand nombre de systèmes à l'intérieur du lanceur.

L'invention se destine particulièrement aux télescopes spatiaux avec contrôle actif de l'optique. Les algorithmes de contrôle du miroir secondaire décrits, seulement à titre d'exemple, sont fondés sur des algorithmes à restitution du front d'onde par diversité de phase. Mais l'invention englobe toutes les variantes que pourra envisager l'homme du métier dans le cadre des revendications ci-après.

L'invention concerne également de préférence les télescopes à miroir secondaire déployable mais ne se limite pas à ce type d'architecture.

## Revendications

1. Système optique d'observation spatial comprenant au moins un miroir primaire, un miroir secondaire (4), une base supportrice (1) comportant le miroir primaire, sur laquelle est positionnée une structure mécanique (2) portant un support (3) du miroir secondaire (4), et un moyen de mesure opto-électronique, ladite structure mécanique (2) comprenant plusieurs bras mécaniques (21-26) et le moyen de mesure opto-électronique captant des images acquises par le système optique d'observation spatial, où le système optique d'observation spatial comporte un système (5) comprenant plusieurs actionneurs (51-56) positionnés au niveau de la base supportrice (1), et les extrémités supérieures desdits bras mécaniques étant reliées au support (3) du miroir secondaire sur la périphérie du support,
**caractérisé en ce qu'**il comporte un moyen de calcul calculant des données de correction de positionnement du miroir secondaire à partir de données provenant du moyen de mesure opto-électronique,
**en ce que** lesdits actionneurs étant reliés aux extrémités inférieures desdits bras mécaniques (21-26),
et **en ce que** le positionnement du miroir secondaire (4) est ajusté au moyen des actionneurs (51-56) déplaçant l'extrémité inférieure desdits bras mécaniques (21-26) selon une trajectoire de translation en fonction des données de correction, le moyen de mesure optique, le moyen de calcul et le système d'actionneurs (5) constituant une chaîne de contrôle actif pour la correction du positionnement du miroir secondaire (4) pour ajuster la configuration d'observation du système optique.

2. Système selon la revendication 1, **caractérisé en ce que**, pendant la phase de correction, la longueur des bras mécaniques (21-26) est invariante.

3. Système selon la revendication 2, **caractérisé en ce que** le moyen de calcul élabore les corrections de positionnement du miroir secondaire (4) au moyen d'un algorithme de restitution du front d'onde.

4. Système selon la revendication 3, **caractérisé en ce que** le système d'actionneurs et la structure mécanique portant le support du miroir secondaire constituent les moyens mécaniques destinés à introduire des défauts sur les images mesurées.

5. Système selon l'une quelconque des revendications précédentes, **caractérisé en ce que** la structure mécanique (2) portant le support (3) du miroir secondaire (4) est une structure déployable de façon que, dans une première configuration (figure 4) le support du miroir repose directement sur la base supportrice (1) et, dans une deuxième configuration le support du miroir est à une position éloignée de la base supportrice.

6. Système selon la revendication 5, **caractérisé en ce qu'**il peut être installé à l'intérieur d'un engin spatial et **en ce que** la structure mécanique est configurée dans ladite première position lorsque le système est installé dans ledit engin spatial, et dans ladite deuxième position lorsque le système est en mode d'observation.

7. Système selon l'une quelconque des revendications précédentes, **caractérisé en ce que** le système d'actionneurs (5) comporte des actionneurs (51-52) d'axes de translation perpendiculaire au plan supérieur de la base supportrice (1).

8. Système selon la revendication 7, **caractérisé en ce que** le système d'actionneurs (5) comporte six actionneurs (51-56) répartis sur la périphérie de la base supportrice (1) pour déplacer le support (3) du miroir secondaire (4) selon six degrés de liberté.

9. Système selon la revendication 8, **caractérisé en ce que** la structure mécanique (2) portant le support (3) du miroir (4) comporte six bras mécaniques (21-26).

10. Système selon la revendication 9, **caractérisé en ce que** le miroir secondaire (4) est immobile sur son support (3).

## Patentansprüche

1. Optisches Raumbeobachtungssystem, das Folgendes umfasst: wenigstens einen primären Spiegel, einen sekundären Spiegel (4), einen den primären Spiegel umfassenden Sockel (1), auf dem eine mechanische Struktur (2) positioniert ist die eine Auflage (3) für den sekundären Spiegel (4) trägt, und ein optoelektronisches Messmittel, wobei die mechanische Struktur (2) mehrere mechanische Arme (21-26) umfasst und wobei das optoelektronische Messmittel von dem optischen Raumbeobachtungssystem erfasste Bilder aufnimmt, wobei das optische Raumbeobachtungssystem ein System (5) mit mehreren auf dem Sockel (1) positionierten Aktuatoren (51-56) umfasst und die oberen Enden der mechanischen Arme mit der Auflage (3) des sekundären Spiegels an der Peripherie der Auflage verbunden sind, **dadurch gekennzeichnet, dass** es ein Rechenmittel zum Berechnen von Positionierungskorrekturdaten des sekundären Spiegels auf der Basis von von dem optoelektrischen Messmittel stammenden Daten umfasst, und dadurch, dass die Aktuatoren mit den unteren Enden der mechanischen Arme (21-26) verbunden sind, und dadurch, dass die Positionierung des sekundären Spiegels (4) mit Hilfe von Aktuatoren (51-56) justiert wird, die das untere Ende der mechanischen Arme (21-26) entlang einem Translationsweg in Abhängigkeit von den Korrekturdaten verschieben, wobei das optische Messmittel, das Rechenmittel und das Aktuatorsystem (5) eine aktive Steuerkette zum Korrigieren der Positionierung des sekundären Spiegels (4) bilden, um die Beobachtungskonfigurationen des optischen Systems zu justieren.

2. System nach Anspruch 1, **dadurch gekennzeichnet, dass** die Länge der mechanischen Arme (21-26) während der Korrekturphase unveränderlich ist.

3. System nach Anspruch 2, **dadurch gekennzeichnet, dass** das Rechenmittel die Korrekturen der Positionierung des sekundären Spiegels (4) anhand eines Wellenfrontwiederherstellungsalgorithmus ausarbeitet.

4. System nach Anspruch 3, **dadurch gekennzeichnet, dass** das Aktuatorsystem und die mechanische Struktur, die die Auflage für den sekundären Spiegel trägt, die mechanischen Mittel zum Einleiten von Defekten auf den gemessenen Bildern bilden.

5. System nach einem der vorherigen Ansprüche, **dadurch gekennzeichnet, dass** die mechanische Struktur, die die Auflage (3) für den sekundären Spiegel (4) trägt, eine ausfahrbare Struktur ist, so dass in einer ersten Konfiguration (Fig. 4) die Spiegelauflage direkt auf dem Sockel (1) ruht und in einer zweiten Konfiguration die Spiegelauflage in einer vom Sockel entfernten Position ist.

6. System nach Anspruch 5, **dadurch gekennzeichnet, dass** es in einem Raumfahrzeug installiert werden kann, und dadurch, dass die mechanische Struktur in der ersten Position konfiguriert ist, wenn das System in dem Raumfahrzeug installiert ist, und in der zweiten Position, wenn das System im Beobachtungsmodus ist.

7. System nach einem der vorherigen Ansprüche, **dadurch gekennzeichnet, dass** das Aktuatorsystem (5) Aktuatoren (51-52) mit Translationsachsen lotrecht zur oberen Ebene des Sockels (1) umfasst.

8. System nach Anspruch 7, **dadurch gekennzeichnet, dass** das Aktuatorsystem (5) sechs Aktuatoren (51-56) umfasst, die auf der Peripherie des Sockels (1) verteilt sind, um die Auflage (3) des sekundären Spiegels (4) gemäß sechs Freiheitsgraden zu verschieben.

9. System nach Anspruch 8, **dadurch gekennzeichnet, dass** die die Auflage (3) des Spiegels (4) tragende mechanische Struktur (2) sechs mechanische Arme (21-26) umfasst.

10. System nach Anspruch 9, **dadurch gekennzeichnet, dass** der sekundäre Spiegel (4) auf seiner Auflage (3) unbeweglich ist.

## Claims

1. An optical space observation system comprising at least one primary mirror, one secondary mirror (4), one support base (1) comprising said primary mirror, with a mechanical structure (2) being positioned on said support base (1) and bearing a support (3) of said secondary mirror (4), and optoelectronic measurement means, said mechanical structure (2) comprising a plurality of mechanical arms (21-26) and said optoelectronic measurement means capturing images acquired by said optical space observation system, wherein said optical space observation system comprises a system (5) comprising a plurality of actuators (51-56) positioned on said support base (1) and the upper ends of said mechanical arms are connected to said support (3) of said secondary mirror on the periphery of said support, **characterised in that** it comprises a computation means computing secondary mirror positioning correction data on the basis of data originating from said optoelectronic measurement means, and **in that** said actuators are connected to the lower ends of said mechanical arms (21-26), and **in that** the positioning of said secondary mirror (4) is adjusted by means of actuators (51-56) displacing the lower end of said mechanical arms (21-26) along a translation trajectory as a function of the correction data, said optical measurement means, said computer means and said system (5) of actuators forming an active control chain for correcting the positioning of said secondary mirror (4) so as to adjust the observation configurations of said optical system.

2. The system according to claim 1, **characterised in that**, during the correction phase, the length of said mechanical arms (21-26) is invariable.

3. The system according to claim 2, **characterised in that** said computation means compiles the corrections for the positioning of said secondary mirror (4) using a wavefront reconstruction algorithm.

4. The system according to claim 3, **characterised in that** said system of actuators and said mechanical structure bearing said support of said secondary mirror form the mechanical means that are designed to introduce defects on the measured images.

5. The system according to any one of the preceding claims, **characterised in that** said mechanical structure (2) bearing said support (3) of said secondary mirror (4) is a deployable structure such that, in a first configuration (figure 4), said mirror support rests directly on said support base (1) and, in a second configuration, said mirror support is in a position that is separate from said support base.

6. The system according to claim 5, **characterised in that** it can be installed inside a spacecraft and **in that** said mechanical structure is configured in said first position when said system is installed inside said spacecraft and in said second position when said system is in observation mode.

7. The system according to any one of the preceding claims, **characterised in that** said system (5) of actuators comprises actuators (51-52) with translation axes that are perpendicular to the upper plane of said support base (1).

8. The system according to claim 7, **characterised in that** said system (5) of actuators comprises six actuators (51-56) distributed over the periphery of said support base (1) for displacing said support (3) of said secondary mirror (4) along six degrees of freedom.

9. The system according to claim 8, **characterised in that** said mechanical structure (2) bearing said support (3) of said mirror (4) comprises six mechanical arms (21-26).

10. The system according to claim 9, **characterised in that** said secondary mirror (4) is immovably fixed to said support (3).
